# NEW EUROPEAN PATENT SPECIFICATION

(11) **EP 0 903 978 B2**
(45) Date of publication and mention of the opposition decision: **12.07.2006**
(45) Mention of the grant of the patent: 02.08.2000
(21) Application number: 98900459.3
(22) Date of filing: 08.01.1998
(51) Int. Cl.: A01J 5/013, A01J 7/00

(54) **A METHOD OF ESTABLISHING THE PRESENCE OF SPECIFIC SUBSTANCES IN MILK AS WELL AS AN IMPLEMENT FOR APPLYING SAME**
VERFAHREN ZUR ERFASSUNG DER ANWESENHEIT VON BESTIMMTEN SUBSTANZEN IN MILCH UND VORRICHTUNG ZU DEREN ANWENDUNG
PROCEDE PERMETTANT D'ETABLIR LA PRESENCE DE SUBSTANCES SPECIFIQUES DANS LE LAIT ET OUTIL PERMETTANT D'APPLIQUER LEDIT PROCEDE

(30) Priority: 13.01.1997 NL 1004980
(43) Date of publication of application: 31.03.1999
(73) Proprietor: MAASLAND N.V., 3155 PD Maasland (NL)
(72) Inventor: VAN DEN BERG, Karel, NL-2971 BR Bleskengraaf (NL)
(74) Representative: Corten, Maurice Jean F.M.
(86) International application number: PCT/NL1998/000013
(87) International publication number: WO 1998/030084

(56) References cited:
- EP-A- 0 628 244
- DE-A- 2 759 126
- US-A- 4 190 020
- US-A- 4 447 725
- US-A- 5 252 829
- US-A- 5 258 620
- TSENKOVA ET AL: 'NIR spectroscopy for evaluating milk quality', Prospects for Automatic milking; Wageningen 1992, pages 185-192

## Description

The present invention relates to a method of establishing the presence of specific substances, such as contaminations, in the milk yielded from individual animals and obtained at consecutive milking runs.

Such a method is known from German Offenlegungsschrift 27 59126. In this known method there is utilized a colour sensor reacting to the presence in the milk of contaminations, such as blood or pus. The invention aims at providing a more universal method of establishing the presence in the milk of specific substances, such as contaminations, in which method the composition of the milk, which is specific for each animal, is taken into account. In accordance with the invention, the method described in the preamble is characterized in that with the aid of a colour sensor measuring system the intensity of a number of defined colours in the milk is established; that the intensity values thus obtained are stored in a data file that is present for a relevant animal in a computer; that these intensity values are compared both mutually and with corresponding intensity values recorded during one or more previous milking runs, and that the results of this comparison process are indicated. By means of the colour sensor measuring system, in particular the intensity of the individual colours in the milk obtained from the separate udder quarters can be established. According to the method described and depicted here, the intensity values established each time are compared with the previously established, so-called historical values therefor. This method implies in particular that the intensity values obtained at each milking run can be compared with corresponding calibration values, while there can again be formed a calibration value by the moving average of the intensity values that have been obtained for a specific animal during a defined number of most recent milking runs. When applying the method described and depicted here it is furthermore important that the results of the comparison process are rendered in such a manner that the presence in the milk of specific substances, such as contaminations, can be read directly therefrom.

Besides to a method, the invention also relates to an implement for applying the method described and depicted here for establishing the presence of specific substances, such as contaminations, in the milk yielded from individual animals and obtained at consecutive milking runs. For that purpose, the implement is characterized in that it is provided with a colour sensor measuring system including one or more sensors that are accommodated in the milk line circuit of an automatic milking system to establish the intensity of a number of defined colours in the milk, as well as a computer connected to said colour sensor measuring system, in which computer the intensity values thus obtained are stored in a data file present therein for a relevant animal, and these intensity values are furthermore compared both mutually and with corresponding intensity values recorded during one or more previous milking runs, while there are additionally provided means that are connected to the computer for the purpose of indicating the results of this comparison process. The sensors are preferably disposed in the milk lines extending from each of the teat cups of the automatic milking system. When it appears from the comparison process that there are inadmissible amounts of undesirable substances present in the milk, the computer can supply a signal to a valve included in the milk line system, via which valve the milk containing these undesirable substances can be discharged separately.

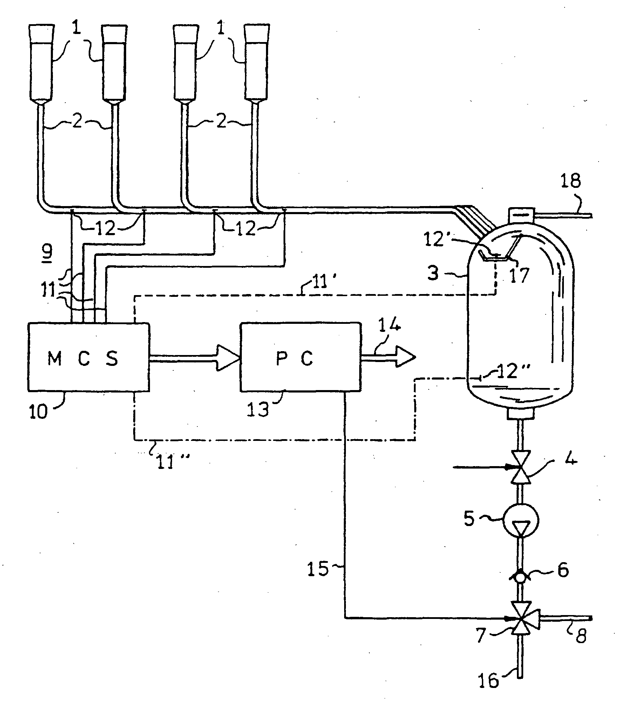

For a better understanding of the invention reference will now be made to the accompanying drawing which shows schematically that part of an automatic milking system in which the application of the invention is expressed.

The drawing shows four teat cups 1 to be connected to the teats of an animal to be milked. The milk discharge hoses 2 of the teat cups 1 debouch into a milk glass 3. To the milk glass 3 there is furthermore connected a vacuum line 18 for applying an underpressure in the milk glass 3 itself, in the milk discharge hoses 2 and in the teat cups 1, which underpressure is required for keeping the teat cups connected to the teats of the animal, for milking and for separating milk and air present therein in the milk glass 3. Via a valve 4, a pump 5, a non-return valve 6 and a three-way valve 7, the milk obtained is discharged from the milk glass 3 through a line 8 to a (non-shown) milk tank.

The drawing additionally shows a colour sensor measuring system 9 comprising a colour intensity processing unit (MCS) 10, to which four sensors 12 are connected via glass fibre cables 11. These sensors 12 are accommodated in the milk lines 2 to establish the intensity of a number of defined colours in the milk and to supply signals representing these intensities to the processing unit 10. As colour sensor measuring system the Modular Color Sensor system CS1 of Stracon Messsysteme GmbH, Im Camisch 10, Kahla can be used. The sensors utilized in this system are sensitive to frequencies in frequency bands for red, green and blue. Therefore, per measurement there are supplied three signals which can be considered as intensity values for these three colours. For milk of a constant composition these three intensity values will have a fixed mutual relation, which relation, however, is disturbed as soon as the milk contains a contamination. To the colour sensor measuring system 9 there is connected a computer (PC) 13 in which for each animal to be milked there is present a data file in which all the data required for milking a relevant animal are stored. At each milking run also the obtained three intensity values of the relevant colours in the milk are recorded. These intensity values stored at each milking run constitute the so-called historical intensity values. From the historical intensity values, which have been obtained for a relevant animal during a defined number of most recent milking runs, the moving average can be determined. The intensity values obtained at a next milking run can be compared with this moving average, i.e. the most recently obtained intensity value of each of the three colours can be compared with the corresponding intensity value which is recorded as moving average in the computer. In other words, the intensity values are compared both mutually and with corresponding intensity values recorded during one or more previous milking runs. This comparison process takes place in the computer 13. Subsequently, the results of this comparison process can be rendered in such a manner that the presence in the milk of specific substances, such as contaminations, can be read directly therefrom. Via the line 14 these results can be supplied to a viewing screen or a printer.

Instead of determining the moving average of the intensity values for each of the colours, it is also possible to establish in an other manner a calibration value for each colour. It is possible to apply calibration values that could prevail for the milk obtained from all the animals. In that case it will not be necessary to dispose a sensor 12 in each of the milk discharge hoses 2, but it will be possible to dispose in the milk glass 3 an overflow reservoir 17 in which such a sensor 12' is accommodated, which sensor 12' is connected to the processing unit 10 via a glass fibre cable represented by a dashed line. As a further alternative, a sensor 12" can be disposed in the lower part of the milk glass 3. Also in the latter case the sensor has to be connected to the processing unit 10 via a glass fibre cable 11".

However, in all cases it applies that, when inadmissible amounts of undesirable substances appear to be present in the milk, there is supplied a signal by the computer 13 via the line 15 to the three-way valve 7, by means of which valve and the line 16 connected thereto the milk containing these undesirable substances can be discharged separately.

When, for example, the milk is contaminated by blood, the intensity value supplied by the sensor 12 for the colour red will be higher than in case of milk free from blood. Then, the intensity value will be higher than the moving average established on the basis of the historical intensity values or higher than the calibration value applied. Also when the milk does not contain contaminations, there may be established changes in the concentration of substances that are normally present in the milk. For example, when in the course of the lactation period the fat content of the milk changes, the mutual relation of the three intensity values that are established during each milking run will change as well.

As the composition of the milk varies for different animals, which is even visually perceptible from the colour, the intensity values for the three colours will have a different mutual relation value for different animals. Therefore, it is advantageous to determine the intensity values for each animal individually at each milking run and to compare them with calibration values or, in particular, moving ave rages established for th is specific animal.

## Claims

1. A method of establishing the presence of specific substances, such as contaminations, in the milk yielded from individual animals and obtained at consecutive milking runs, **characterized in that** with the aid of a colour sensor measuring system (9) the intensity of a number of defined colours in the milk is established; that the intensity values thus obtained are stored in a data file that is present for a relevant animal in a computer (13); that these intensity values are compared both mutually and with corresponding intensity values recorded during one or more previous milking runs and that the results of this comparison process are indicated.

2. A method as claimed in claim 1, **characterized in that** by means of the colour sensor measuring system (9) the intensity of the individual colours in the milk obtained from the separate udder quarters is established.

3. A method as claimed in claim 1 or 2, **characterized in that** the intensity values obtained at each milking run are compared with corresponding calibration values.

4. A method as claimed in claim 3, **characterized in that** there is formed a calibration value by the moving average of the intensity values that have been obtained for a specific animal during a defined number of most recent milking runs.

5. A method as claimed in any one of the preceding claims, **characterized in that** the results of the comparison process are rendered in such a manner that the presence in the milk of specific substances, such as contaminations, can be read directly therefrom.

6. An implement for applying a method of establishing the presence of specific substances, such as contaminations, in the milk yielded from individual animals and obtained at consecutive milking runs, which method is described in any one of claims 1 to 5, **characterized in that** the implement is provided with a colour sensor measuring system (9) including one or more sensors (12) that are accommodated in the milk line circuit of an automatic milking system to establish the intensity of a number of defined colours in the milk, as well as a computer (13) connected to said colour sensor measuring system (9) in which computer (13) the intensity values thus obtained are stored in a data file present therein for a relevant animal, and these intensity values are furthermore compared both mutually and with corresponding intensity values recorded during one or more previous milking runs, while there are additionally provided means that are connected to the computer (13) for the purpose of indicating the results of this comparison process.

7. An implement as claimed in claim 5, **characterized in that** the sensors (12) are disposed in the milk lines (2) extending from each of the teat cups (1) of the automatic milking system.

8. An implement as claimed in claim 6 or 7, **characterized in that**, when it appears from the comparison process that there are inadmissible amounts of undesirable substances present in the milk, the computer (13) supplies a signal to a valve (4) included in the milk line system, via which valve (4) the milk containing these undesirable substances can be discharged separately.

## Patentansprüche

1. Verfahren zur Ermittlung des Vorhandenseins bestimmter Substanzen, wie z. B. Verunreinigungen, in der Milch, die von einzelnen Tieren während aufeinanderfolgender Melkvorgänge gewonnen wurde,
**dadurch gekennzeichnet, daß** mit Hilfe einer Farbsensormeßvorrichtung (9) die Intensität einer Anzahl von bestimmten Farben in der Milch ermittelt wird; daß die auf diese Weise ermittelten Intensitätswerte in einer für ein jeweiliges Tier in einem Computer (13) vorhandenen Datei gespeichert werden; daß diese Intensitätswerte sowohl miteinander als auch mit entsprechenden Intensitätswerten verglichen werden, die im Verlaufe eines oder mehrerer vorheriger Melkvorgänge aufgezeichnet wurden, und daß die Ergebnisse dieses Vergleichsvorganges angezeigt werden.

2. Verfahren nach Anspruch 1,
**dadurch gekennzeichnet, daß** mittels der Farbsensormeßvorrichtung (9) die Intensität der einzelnen Farben in der von den einzelnen Eutervierteln gewonnenen Milch ermittelt wird.

3. Verfahren nach Anspruch 1 oder 2,
**dadurch gekennzeichnet, daß** die bei jedem Melkvorgang ermittelten Intensitätswerte mit entsprechenden Eichwerten verglichen werden.

4. Verfahren nach Anspruch 3,
**dadurch gekennzeichnet, daß** ein Eichwert durch den beweglichen Mittelwert der Intensitätswerte gebildet wird, die für ein bestimmtes Tier während einer bestimmten Anzahl von kurz zuvor durchgeführten Melkvorgängen ermittelt wurden.

5. Verfahren nach einem der vorhergehenden Ansprüche,
**dadurch gekennzeichnet, daß** die Ergebnisse des Vergleichsvorganges in der Weise angezeigt werden, daß das Vorhandensein von bestimmten Substanzen, wie z. B. Verunreinigungen, in der Milch unmittelbar davon ablesbar ist.

6. Vorrichtung zur Anwendung eines Verfahrens zur Ermittlung des Vorhandenseins bestimmter Substanzen, wie z. B. Verunreinigungen, in der Milch, die von einzelnen Tieren während aufeinanderfolgender Melkvorgänge gewonnen wurde, wobei das Verfahren in einem der Ansprüche 1 bis 5 beschrieben ist,
**dadurch gekennzeichnet, daß** die Vorrichtung mit einer Farbsensormeßvorrichtung (9) mit einem oder mehreren Sensoren (12) ausgestattet ist, die im Milchleitungskreislauf einer automatischen Melkvorrichtung angeordnet sind, um die Intensität einer Anzahl von bestimmten Farben in der Milch zu ermitteln, daß die Vorrichtung ferner einen mit der Farbsensormeßvorrichtung (9) verbundenen Computer (13) aufweist, in welchem die auf diese Weise ermittelten Intensitätswerte in einer für ein jeweiliges Tier vorhandenen Datei gespeichert werden, und daß diese Intensitätswerte außerdem sowohl miteinander als auch mit entsprechenden Intensitätswerten verglichen werden, die im Verlaufe eines oder mehrerer vorheriger Melkvorgänge aufgezeichnet wurden, wobei zusätzlich mit dem Computer (13) verbundene Vorrichtungen vorhanden sind, um die Ergebnisse dieses Vergleichsvorganges anzuzeigen.

7. Vorrichtung nach Anspruch 6,
**dadurch gekennzeichnet, daß** die Sensoren (12) in den Milchleitungen (2) angeordnet sind, die an jeden der Zitzenbecher (1) der automatischen Melkvorrichtung angeschlossen sind.

8. Vorrichtung nach Anspruch 6 oder 7,
**dadurch gekennzeichnet, daß** der Computer (13), wenn sich während des Vergleichsvorganges ergibt, daß die Milch unzulässige Mengen unerwünschter Substanzen enthält, ein Signal an ein im Milchleitungssystem angeordnetes Ventil (4) gibt, über welches die diese unerwünschten Substanzen enthaltende Milch getrennt abführbar ist.

## Revendications

1. Procédé pour établir la présence de substances spécifiques, telles que des contaminants, dans le lait produit par des animaux individuels et obtenu après des tours de traite consécutifs, **caractérisé en ce que**, à l'aide d'un système de mesure à détecteurs de couleurs (9) l'intensité de nombreuses couleurs définies dans le lait est établie, **en ce que** les valeurs d'intensité ainsi obtenues sont mémorisées dans un fichier de données qui est présent, pour un animal d'intérêt, dans un ordinateur (13), **en ce que** ces valeurs d'intensité sont comparées à la fois mutuellement et aux valeurs d'intensité correspondantes enregistrées durant un ou plusieurs tours de traite antérieurs et **en ce que** les résultats de ce processus de comparaison sont indiqués.

2. Procédé selon la revendication 1, **caractérisé en ce que**, par l'intermédiaire du système de mesure à détecteurs de couleurs (9), l'intensité des couleurs individuelles dans le lait obtenu à partir des quarts de pis séparés est établie.

3. Procédé selon la revendication 1 ou 2, **caractérisé en ce que** les valeurs d'intensité obtenues à chaque tour de traite sont comparées à des valeurs étalon correspondantes.

4. Procédé selon la revendication 3, **caractérisé en ce qu'**une valeur étalon est formée par la moyenne mobile des valeurs d'intensité qui ont été obtenues pour un animal spécifique durant un nombre défini des plus récents tours de traite.

5. Procédé selon l'une quelconque des revendications précédentes, **caractérisé en ce que** les résultats du processus de comparaison sont restitués d'une manière telle que la présence dans le lait de substances spécifiques, telles que des contaminants, peut être lue directement à partir de ceux-ci.

6. Dispositif pour mettre en oeuvre un procédé permettant d'établir la présence de substances spécifiques, telles que des contaminants, dans le lait produit par des animaux individuels et obtenu après des tours de traite consécutifs, lequel procédé est décrit dans l'une quelconque des revendications 1 à 5, **caractérisé en ce que** le dispositif est muni d'un système de mesure à détecteurs de couleurs (9) comportant un ou plusieurs détecteurs (12) qui sont agencés dans le circuit de ligne de lait d'un système de traite automatique pour établir l'intensité de nombreuses couleurs définies présentes dans le lait ainsi qu'un ordinateur (13) relié audit système de mesure à détecteurs de couleurs (9), ordinateur (13) dans lequel sont mémorisées les valeurs d'intensité ainsi obtenues dans un fichier de données présent à l'intérieur, pour un animal d'intérêt, et ces valeurs d'intensité sont en outre comparées à la fois mutuellement et aux valeurs d'intensité correspondantes enregistrées durant un ou plusieurs tours de traite antérieurs, alors que des moyens sont de plus agencés en étant connectés à l'ordinateur (13) dans le but d'indiquer les résultats de ce processus de comparaison.

7. Dispositif selon la revendication 5, **caractérisé en ce que** les détecteurs 12) sont positionnés dans les lignes de lait (2) s'étendant à partir de chacun des gobelets trayeurs (1) du système de traite automatique.

8. Dispositif selon la revendication 6 ou 7, **caractérisé en ce que**, lorsque le processus de comparaison fait apparaître qu'il existe des quantités inadmissibles de substances indésirables présentes dans le lait, l'ordinateur (13) délivre un signal dans une vanne (4) incluse dans le système de ligne de lait, vanne (4) via laquelle peut être déversé séparément le lait contenant ces substances indésirables.
